# EUROPEAN PATENT APPLICATION

(11) **EP 4 729 660 A2**
(43) Date of publication of application: **22.04.2026**
(21) Application number: 25205375.6
(22) Date of filing: 29.09.2025
(51) Int. Cl.: C25B 15/08, C25B 1/04, C25B 9/19, C25B 9/75, C25B 9/77, C25B 15/00, C02F 1/00, C02F 1/42

(54) **SYSTEM AND METHODS OF WATER ELECTROLYSIS**

(30) Priority: 30.09.2024 US 202463700835 P
(71) Applicant: Services Pétroliers Schlumberger, 75007 Paris (FR); Schlumberger Technology B.V., 2514 JG The Hague (NL)
(72) Inventor: CABELLO CARRAMOLINO, Gema, Cambridge, CB3 0EL (GB); HO, Man Yi, Cambridge, CB3 0EL (GB); ZHANG, Wenlin, Menlo Park, 94025 (US); LAVRUT, Eric, 92140 Clamart (FR); NELSON, Alan, Houston, 77056 (US)
(74) Representative: Schlumberger Intellectual Property Department

(57) **Abstract**

Provided herein are alkaline electrolyzer systems comprising one or more components that improve the performance, efficiency, and/or longevity of the system. For example, the alkaline electrolyzer system may comprise one or more of (1) a filtration component comprising one or more filtration media, (2) an ion exchange component comprising at least one ion exchange resin, (3) a corrosion inhibition component configured to introduce at least one corrosion inhibitor into the electrolyte solution, and (4) a chelating agent component configured to introduce at least one chelating agent into the electrolyte solution.

## Description

### CROSS-REFERENCE TO RELATED APPLICATIONS

The present application claims priority from U.S. Provisional Application No. 63/700835, filed September 30, 2024, entitled "SYSTEM AND METHODS OF WATER ELECTROLYSIS," the entirety of which is incorporated herein by reference.

### BACKGROUND

Electrolysis of water is utilized for the production of hydrogen (H₂) to be used as an alternative energy source and green hydrogen for hard-to-abate heavy industries such as chemical and steel industries. Electrolysis of water requires water as a feed material and converts, using an electrochemical cell, water into H₂ and diatomic oxygen (O₂) via a redox reaction by applying an external electrical power to the cell. Electrolysis of water is generally implemented by an electrolyzer system that includes one or more stacks of electrochemical cells. Electrolyzer cells make use of an electrochemical reaction in a cell that comprises an anode, cathode, catalyst, gas distribution field and electrolyte.

Electrodes used in electrolyzer systems are commonly made of nickel. For example, many alkaline electrolyzer systems use electrodes constructed from a nickel mesh coated with Raney nickel. Unfortunately, electrodes used in electrolyzer systems have a limited lifetime, typically around 10 years. Over their lifetime, electrodes often exhibit a continuous decrease in performance due to degradation and loss of electrochemically active surface area (EASA). Impurities present in the system can also cause aging of the electrolyte solution, leading to decreased system performance.

Accordingly, improved systems and methods of water electrolysis are needed. In particular, there is a need in the industry for systems and methods that reduce or prevent degradation and improve the efficiency and longevity of alkaline electrolyzers.

### SUMMARY

In one aspect, provided herein is a system for electrolyzing water, the system comprising a first electrode set, a diaphragm, a second electrode set, an electrolyte solution, and a filtration component. The first electrode set may comprise a first bipolar plate electrically coupled to a first power source, and a first electrode disposed adjacent to the first bipolar plate and in electrical contact with the first bipolar plate. The first electrode may be disposed adjacent to a first side of the diaphragm. The second electrode set may comprise a second bipolar plate and a second electrode. The second electrode may be disposed adjacent to a second side of the diaphragm, the second side opposite the first side. The electrolyte solution may have a pH greater than 7. The filtration component may comprise one or more filtration media, and the system may be configured to pass the electrolyte solution through the one or more filtration media.

In another aspect, provided herein is a system for electrolyzing water, the system comprising a first electrode set, a diaphragm, a second electrode set, an electrolyte solution, and an ion exchange component. The first electrode set may comprise a first bipolar plate electrically coupled to a first power source, and a first electrode disposed adjacent to the first bipolar plate and in electrical contact with the first bipolar plate. The first electrode may be disposed adjacent to a first side of the diaphragm. The second electrode set may comprise a second bipolar plate and a second electrode. The second electrode may be disposed adjacent to a second side of the diaphragm, the second side opposite the first side. The electrolyte solution may have a pH greater than 7. The ion exchange component may comprise at least one ion exchange resin, and the system may be configured to pass the electrolyte solution through the at least one ion exchange resin.

In another aspect, provided herein is a system for electrolyzing water, the system comprising a first electrode set, a diaphragm, a second electrode set, an electrolyte solution, and a corrosion inhibition component. The first electrode set may comprise a first bipolar plate electrically coupled to a first power source, and a first electrode disposed adjacent to the first bipolar plate and in electrical contact with the first bipolar plate. The first electrode may be disposed adjacent to a first side of the diaphragm. The second electrode set may comprise a second bipolar plate and a second electrode. The second electrode may be disposed adjacent to a second side of the diaphragm, the second side opposite the first side. The electrolyte solution may have a pH greater than 7. The corrosion inhibition component may be configured to introduce at least one corrosion inhibitor into the electrolyte solution.

In another aspect, provided herein is a system for electrolyzing water, the system comprising a first electrode set, a diaphragm, a second electrode set, an electrolyte solution, and a chelating agent component. The first electrode set may comprise a first bipolar plate electrically coupled to a first power source, and a first electrode disposed adjacent to the first bipolar plate and in electrical contact with the first bipolar plate. The first electrode may be disposed adjacent to a first side of the diaphragm. The second electrode set may comprise a second bipolar plate and a second electrode. The second electrode may be disposed adjacent to a second side of the diaphragm, the second side opposite the first side. The electrolyte solution may have a pH greater than 7. The chelating agent component may be configured to introduce at least one chelating agent into the electrolyte solution.

The following description and the appended figures set forth certain features for purposes of illustration.

### BRIEF DESCRIPTION OF DRAWINGS

So that the manner where the above recited features may be understood in detail, a more particular description, briefly summarized above, may be had by reference to example aspects, some of which are illustrated in the appended drawings.
FIG. 1 is a schematic view of an electrolyzer cell, according to embodiments of the present disclosure.
FIG. 2 is a schematic view of an alkaline electrolyzer system including the electrolyzer cell of FIG. 1.
FIG. 3 is a schematic view of a chemical injection system of the alkaline electrolyzer system of FIG. 2.

### DETAILED DESCRIPTION

One or more specific embodiments of the present disclosure will be described herein. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The present disclosure generally relates to systems and methods of water electrolysis. The systems may include a first electrode set. The first electrode set includes a first bipolar plate electrically coupled to a power source. A first electrode is disposed adjacent to the first bipolar plate and in electrical contact with the first bipolar plate. The systems include a diaphragm. The first electrode is disposed adjacent to a first side of the diaphragm. The systems include a second electrode set. The second electrode set includes a second bipolar plate and a second electrode. The second electrode is disposed adjacent to a second side of the diaphragm. The second side is opposite the first side.

The present disclosure also generally relates to systems and methods of water electrolysis. The methods include generating a current between a first electrode set and a second electrode set separated by a diaphragm, and circulating water within one of the first electrode set or the second electrode set. The first electrode set includes a first bipolar plate electrically coupled to a power source, and a first electrode disposed adjacent to the first bipolar plate and to a first side of the diaphragm and in electrical contact with the first bipolar plate. The second electrode set includes a second bipolar plate and a second electrode. The second electrode is disposed adjacent to a second side of the diaphragm. The second side is opposite the first side, and in electrical contact with the second bipolar plate. The current, in the presence of water, produces an electrolysis reaction.

Also provided herein are alkaline electrolyzer systems comprising one or more components that improve the performance, efficiency, and/or longevity of the system, as described in further detail below.

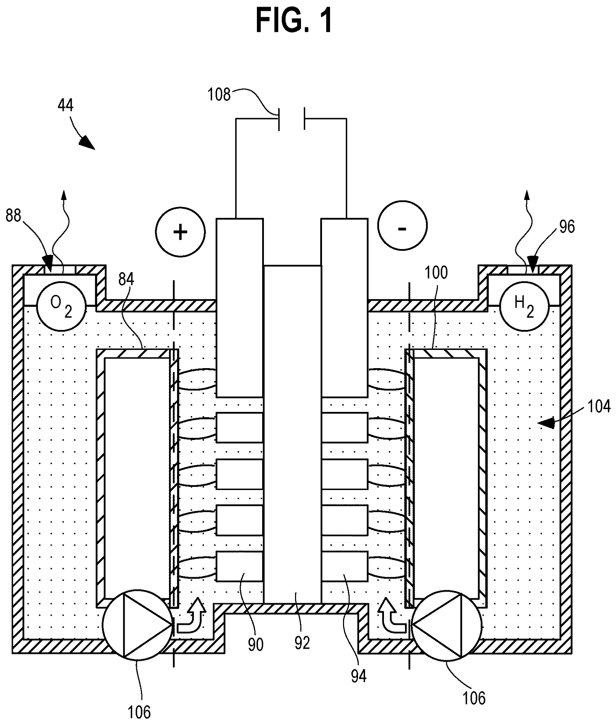

Turning now to the figures, FIG. 1 shows a detailed view of an electrolyzer cell 44. In this view only one electrolyzer cell is shown, however, two or more electrolyzer cells may be coupled in series in order to produce more hydrogen. The electrolyzer cell 44 includes a first bipolar plate 84 that is adjacent to a first channel 88 and a first electrode 90. The first channel 88 may be a channel suitable to recover one or more reaction products of an electrolysis reaction, e.g., H₂ and/or O₂. For example, the first channel 88 may be suitable to recover a reaction product of O₂. A positive charge may be supplied to the first bipolar plate 84 via a power source 108. The first bipolar plate 84 is electrically coupled to the first electrode 90. The first electrode 90 can include a conductive material, e.g., a nickel mesh. The first electrode 90 is a conductive material, thereby allowing for electrolysis reaction products, e.g., gaseous bubbles such as O₂, to form.

Adjacent to the first electrode 90 is a diaphragm 92. The diaphragm 92 can be nonconductive to electrons. The diaphragm 92 can include a composite material, e.g., Zirconia and polysulfone. Without being bound by theory, the diaphragm 92 can allow OH⁻ ions to pass through the diaphragm 92, while restricting H₂ and O₂ gases from passing through.

Adjacent to the diaphragm 92 is a second electrode 94 and a second channel 96. The second channel 96 may be a channel suitable to recover one or more reaction products of an electrolysis reaction, *e.g.,* H₂. For example, the second channel 96 may be suitable to recover a reaction product of H₂. The second electrode 94 can include a conductive material, e.g., a nickel mesh. The second electrode 94 is a conductive material, thereby allowing for electrolysis reaction products, e.g., gaseous bubbles such as H₂, to form. Adjacent to the second electrode 94 is a second bipolar plate 100. A negative charge may be supplied to the second bipolar plate 100 via the power source 108. The second bipolar plate 100 is electrically coupled to the second electrode 94.

The electrolyzer cell 44 is immersed in an electrolyte solution 104. The electrolyte solution 104 includes an alkaline solution, *e.g.,* a solution having a pH greater than 7, *e.g.,* greater than 7.5, greater than 8, greater than 9, greater than 10, or greater than 11. The alkaline solution can include an aqueous solution having an electrolyte, e.g., a hydroxide electrolyte. For example, the electrolyte solution can include a mixture of water and potassium hydroxide. The electrolyzer cell 44 receives water and/or electrolyte solution 104 from a pump 106. The pump 106 can include any pump suitable to circulate an aqueous fluid, e.g., water and/or the electrolyte solution 104. While in the present view only one pump is shown, it will be appreciated that a plurality of pumps 106 may be arranged in series or in parallel to provide the electrolyte solution 104 to electrolyzer cell 44.

In operation, the electrolyzer cell 44 may receive a positive charge at the first bipolar plate 84 and a negative charge at the second bipolar plate 100, thereby creating a voltage difference across the first electrode 90 and the second electrode 94, which is separated by the diaphragm 92. Due to the voltage difference and the supply of aqueous water from the pump 106, water may be reduced on the second electrode 94 to form H₂. The H₂ may then diffuse and be directed out of the second channel 96, *e.g.,* via convectional flow. The OH⁻ may transfer through the diaphragm and be oxidized on the first electrode 90 to produce H₂O and O₂. The O₂ may diffuse and be directed out the first channel 88, *e.g.,* via convectional flow, in which the H₂O may recirculate throughout the electrolyzer cell 44 to be further reacted.

Without being bound to a particular theory, a diaphragm and/or membrane within an alkaline electrolyzer system (e.g., diaphragm 92) can become degraded due to mechanical, thermal, and/or chemical causes. For example, chemical impurities may be present in the water used to produce electrolyte solution 104. Chemical impurities may also be introduced into the system via corrosion and dissolution of the electrodes, catalysts, and other components of the electrolysis system.

The electrolysis system may comprise one or more chemical impurities selected from the group consisting of cationic, anionic, and organic impurities.

Cationic impurities include, for example, metal cations. Non-limiting examples of metal ions that may be present in the electrolysis system include Fe³⁺, Ni²⁺, Zn²⁺, Cd²⁺, Pb²⁺, Ca²⁺, and Mg²⁺. For example, and without being bound to a particular theory, Fe³⁺ and Ni²⁺ can be adsorbed on a catalyst (if present), as optimal amounts of these cations can enhance both the oxygen evolution reaction (OER) and the hydrogen evolution reaction (HER); however, Fe³⁺ and Ni²⁺ cations can also become adsorbed upon the diaphragm and/or membrane and degrade its performance. In contrast, Zn²⁺, Cd²⁺, and Pb²⁺ anions will inhibit the OER and the HER, while also degrading the performance of the diaphragm and/or membrane. Ca²⁺ and Mg²⁺ cations can form deposits at high pH, may block reactant access to catalyst sites, and can also degrade the performance of the diaphragm and/or membrane.

Anionic impurities include, for example, carbon dioxide species (e.g., CO₂, CO₃⁻) and carbonate species (e.g., HCO₃⁻, CO₃²⁻). For example, CO₂ poisoning can change the physical structure of the membrane and reduce its ionic conductivity. Without being bound to a particular theory, CO₂ can come from the leakage sealing and oxidation of organic impurities in the electrolyte, as the applied anodic potential in an alkaline electrolyzer system is much higher than the oxidation potential of the organic species in these components. Additionally, CO₂ can react with KOH to form bicarbonate (HCO₃⁻) and carbonate (CO₃²⁻). These species can replace the intended charge carrier OH⁻ within the membrane and reduce the ionic conductivity, as the conductivity decreases according to the following order: OH⁻ > HCO₃⁻ > CO₃²⁻. Furthermore, the highly alkaline pH present within the alkaline electrolyser (e.g., the pH of electrolyte solution 104) can cause precipitation of metallic ions due to the low solubility of their oxides and carbonates. Therefore, metallic carbonates and hydroxides (e.g. Mg(OH)₂) and other organic impurities can clog the membrane pores, reducing both the mass transport and ionic conductivity within the membrane.

Organic impurities include, for example, humic and fulvic acids, tannins, lignin, phenolic compounds, surfactants, and the like.

In an effort to address these issues, provided herein are alkaline electrolyzer systems comprising one or more components that improve the performance, efficiency, and/or longevity of the system. For example, the alkaline electrolyzer system may comprise one or more of (1) a filtration component, (2) an ion exchange component, (3) a corrosion inhibition component, and (4) a chelating agent component, each of which is described in further detail below. Any of these components may be used individually, or one or more components may be used in any order or combination to reduce degradation and promote the longevity of the electrolyzer system.

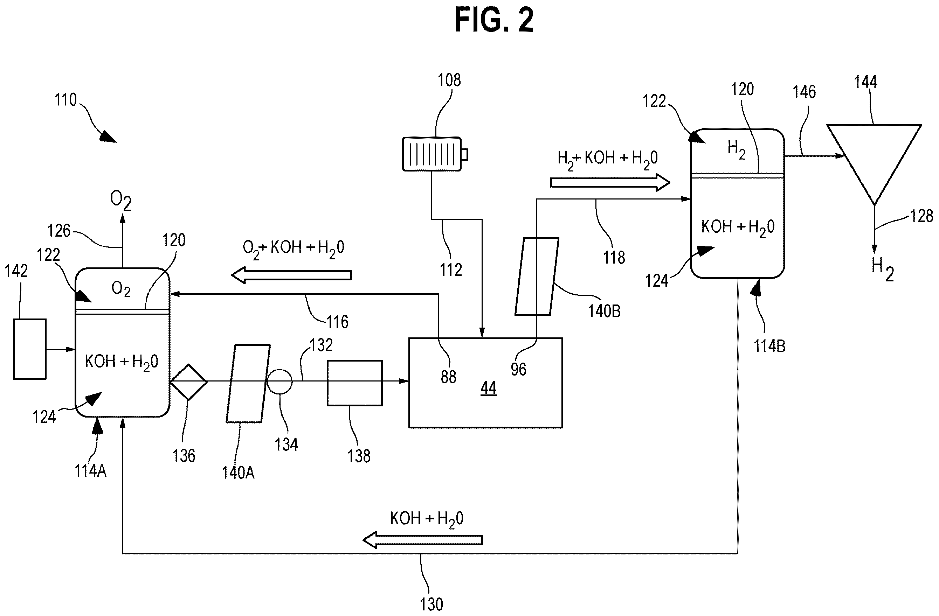

FIG. 2 is a schematic depiction of an alkaline electrolyzer system 110 incorporating the electrolyzer cell 44 described above with reference to FIG. 1. The alkaline electrolyzer system 110 represents a configuration of an alkaline electrolyzer system including the electrolyzer cell 44; however, it should be understood that additional configurations are envisioned in which the alkaline electrolyzer system includes one or more additional and/or alternative components with respect to the alkaline electrolyzer system 110 described below. Additionally, while the alkaline electrolyzer system 110 is depicted with a single electrolyzer cell 44, additional embodiments are envisioned where the electrolyzer system 110 includes two or more electrolyzer cells 44 (e.g., connected in series).

As shown, the power source 108 may be in electrical communication with the electrolyzer cell 44 (or electrolyzer cells 44) such that power may be supplied to the electrolyzer cell 44 via a power line 112 extending between the power source 108 and the electrolyzer cell 44. For example, the power source 108 may be configured to supply a voltage to the electrolyzer cell 44.

The first channel 88 of the electrolyzer cell 44 may be in communication with a first phase separator 114A, and the second channel 96 of the electrolyzer cell 44 may be in communication with a second phase separator 114B. Thus, one or more compounds (e.g., O₂, KOH, and/or H₂O) may be permitted to flow from the first channel 88 to the first phase separator 114A via a first outflow channel 116, and one or more compounds (e.g., H₂, KOH, and/or H₂O) may be permitted to flow from the second channel 96 to the second phase separator 114A via a second outflow channel 118. In some embodiments, a combination of an electrolyte solution (e.g., water and potassium hydroxide or H₂O and KOH) and oxygen gas (O₂) may flow to the first phase separator 114A via the first outflow channel 116, and a combination of an electrolyte solution (e.g., water and potassium hydroxide or H₂O and KOH) and hydrogen gas (H₂) may flow to the second phase separator 114B via the second outflow channel 118.

The first phase separator 114A and the second phase separator 114B may each be configured to separate a mixture received from the electrolyzer cell 44 into gaseous components and liquid components. For example, the first and second phase separators 114A, 114B may include one or more baffles, weirs, demisters, and/or similar components configured to separate gaseous and liquid components. Alternatively, the first and second phase separators 114A, 114B may utilize gravity separation techniques, centrifugal force, or other mechanisms to achieve the desired separation.

In some embodiments, the first and second phase separators 114A, 114B may each include a partition 120 configured to divide each of the first and second phase separators 114A, 114B, respectively, into an isolation chamber 122 and a collection chamber 124. The isolation chamber 122 of the first phase separator 114A may be configured to collect oxygen gas (e.g., O₂) and the isolation chamber 124 of the second phase separator 114B may be configured to collect hydrogen gas (e.g., H₂). The collection chambers 124 of the first and second phase separators 114A, 114B may each be configured to collect electrolyte solution (e.g., KOH and H₂O) that has been separated from the oxygen gas and hydrogen gas, respectively. Oxygen gas may exit the isolation chamber 122 of the first phase separator 114A via an oxygen outlet line 126, and hydrogen gas may exit the isolation chamber 122 of the second phase separator 114B via a hydrogen outlet line 128. In some embodiments, the oxygen outlet line 126 and the hydrogen outlet line 128 may each be couplable to an external vessel (not shown) configured to receive the isolated oxygen gas or hydrogen gas, respectively.

The collection chambers 124 of the first and second phase separators 114A, 114B may be in communication via a return line 130 extending therebetween. Thus, material (e.g., electrolyte solution) that accumulates in the collection chamber 124 of the second phase separator 114B may flow to the collection chamber 124 of the first phase separator 114A via the return line 130. The collection chamber 124 of the first phase separator 114A may be configured to supply electrolyte solution to the electrolyzer cell 44. For example, a supply line 132 may provide communication between the collection chamber 124 of the first phase separator 114A and the electrolyzer cell 44 such that material can flow from the collection chamber 124 of the first phase separator 114A to the electrolyzer cell 44 via the supply line 132.

A pump 134 may be positioned along the supply line 132 and may be configured to drive a flow of fluid through the alkaline electrolyzer system 110. For example, the pump 134 may be configured to drive fluids from the collection chamber 124 of the first phase separator 114A into the supply line 132 and toward the electrolyzer cell 44. The pump 134 may also be configured to generate a flow of fluid from the electrolyzer cell 44 to the first phase separator 114A via the first outflow channel 116, from the electrolyzer cell to the second phase separator 114B via the second outflow channel 118, from the second phase separator 114B to the first phase separator 114A via the return line 130, and/or between other components of the alkaline electrolyzer system 110. In some embodiments, the alkaline electrolyzer system may include one or more additional pumps 134, and the pumps 134 may be positioned in any suitable configuration.

The alkaline electrolyzer system 110 may include one or more filtration components, as described in detail below. For example, the alkaline electrolyzer system 110 may include a filtration component 136 positioned along the supply line 132 such that fluid or a fluid mixture flowing from the first phase separator 114A to the electrolyzer cell 44 passes through the filtration component 136. The filtration component 136 may be configured to, for example, remove or reduce the presence of contaminants and particulates in the fluid or fluid solution before delivering the fluid or fluid solution to the electrolyzer cell 44. In this way, the filtration component 136 may improve the efficiency, resilience, durability, and/or other characteristics or functions of the electrolyzer cell 44 or the alkaline electrolyzer system 110 as a whole. The filtration component 136 may also improve the purity of the produced hydrogen and oxygen gases.

In some embodiments, the alkaline electrolyzer system 110 may include a heat exchanger 138 configured to manage and regulate the temperature profile of the system. The heat exchanger 138 may be configured to improve or maintain a desired level of performance of the alkaline electrolyzer system 110 by maintaining a stable temperature within the system and/or preventing one or more components of the system from overheating. For example, the heat exchanger 138 may be configured to dissipate excess heat generated during electrolysis. In the illustrated embodiment, the heat exchanger 138 is positioned along the supply line 132 (e.g., between the pump 134 and the electrolyzer cell 44). In other embodiments, the alkaline electrolyzer system 110 may include any number of heat exchangers 138, and the heat exchangers 138 may be arranged in any suitable configuration.

The alkaline electrolyzer system 110 may include one or more ion exchange components, as described in detail below. For example, one or more ion exchange components may be configured to improve an efficiency or functioning of the alkaline electrolyzer system 110 (e.g., by facilitating effective electrolysis) by maintaining a desired pH level in the system, maintaining ion flow, removing unwanted ions and/or impurities from the electrolyte solution, and/or performing other functions. The ion exchange components may include one or more ion exchange resins such as cation exchange resins, anion exchange resins, mixed bed resins, chelating resins, and the like.

In the illustrated embodiment, a first ion exchange component 140A may be positioned along the supply line 132 (e.g., between the filter 136 and the pump 134), and a second ion exchange component 140B may be positioned along the second outflow channel 118 (e.g., between the electrolyzer cell 44 and the second phase separator 114B). However, in other embodiments, the alkaline electrolyzer system 110 may include any number of ion exchange components, and the ion exchange components may be positioned in any suitable configuration.

In some embodiments, a chemical injection system 142 may be coupled to (e.g., in communication with) the first phase separator 114A. For example, the chemical injection system 142 may be configured to inject one or more chemicals, compounds, agents, or other substances into the first phase separator 114A (e.g., into the fluid mixture contained within the collection chamber 124). In some embodiments, the chemical injection system 142 may be configured to inject corrosion inhibitors, chelating agents, combinations thereof, and/or other substances into first phase separator 114A. Thus, the chemical injection system 142 may provide corrosion inhibitors (as described below), chelating agents (as described below), or a combination thereof to the alkaline electrolyzer system 110.

The alkaline electrolyzer system 110 may include a treatment component 144 configured to treat the hydrogen gas produced via electrolysis by the electrolyzer cell 44 and isolated in the isolation chamber 122 of the second phase separator 114B. For example, isolated hydrogen gas may flow from the isolation chamber 122 of the second phase separator 114B to the treatment component 144 via a treatment line 146 extending between the second phase separator 114B and the treatment component 144 and facilitating communication therebetween. The treatment component 144 may be configured to (1) perform moisture removal by removing water vapor from the hydrogen gas and/or (2) perform purification by removing contaminants such as oxygen, nitrogen, and other trace gases from the hydrogen gas. In this way, the treatment component 144 may aid the alkaline electrolyzer system 110 in providing high-quality or high-purity hydrogen gas as an output of the electrolysis performed by the electrolyzer cell 44.

As will be understood by one of ordinary skill in the art, the schematic depiction of FIG. 2 portrays an embodiment of the alkaline electrolyzer system 110. However, further embodiments of alkaline electrolyzer systems not specifically described herein may include additional, fewer, or alternative parts without departing from the scope of the present disclosure.

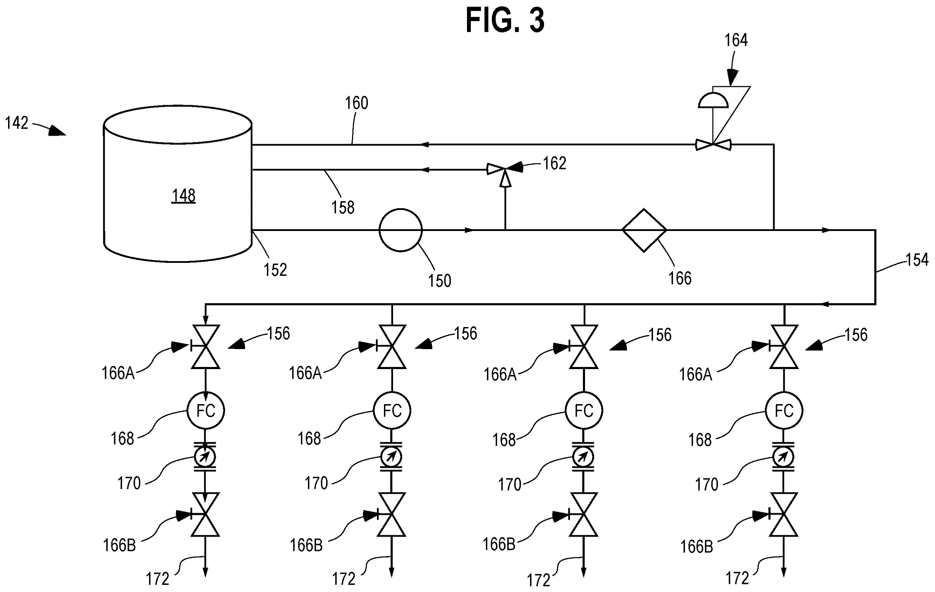

Turning to FIG. 3, the chemical injection system 142 may include a chemical tank 148 retaining one or more corrosion inhibitors, chelating agents, and/or other compounds or substances. A chemical injection pump 150 may be in communication with a chemical tank outlet 152 and may be configured to draw fluid from the chemical tank 148 into a primary chemical supply line 154. In some instances, the chemical injection system 142 may include one or more secondary chemical supply lines 156 in communication with the primary chemical supply line 154. For example, in the illustrated embodiment, the primary chemical supply line 154 branches into four secondary chemical supply lines 156. However, in other embodiments, the chemical injection system 142 may include any number of secondary chemical supply lines 156.

The chemical injection system 142 may include a first return route 158 and a second return route 160, each of which may enable fluid that enters the primary chemical supply line 154 to return to the chemical tank 148 without entering any of the secondary chemical supply lines 156. In some embodiments, the first return route 158 may include a valve 162 (e.g., an angle valve) positioned therealong, and the second return route 160 may include a backpressure regulator 164 positioned therealong. In some embodiments, the chemical injection system 142 may be configured to regulate or maintain a pressure within the chemical injection system 142 in an autonomous or a semi-autonomous manner.

A filter 166 may be positioned along the primary chemical supply line 154 (e.g., between the pump 150 and the secondary supply lines 156). In some embodiments, each secondary supply line 156 may include one or more valves, filters, meters, and/or other components. In the illustrated embodiment, each secondary supply line 156 may include a first isolation valve 166A, a flow control valve 168, a flow meter 170 (e.g., a Coriolis flow meter), a second isolation valve 166B, and a port 172. The port 172 may facilitate coupling between the chemical injection system 142 and the alkaline electrolyzer system 110. For example, in some embodiments, the port 172 may be couplable to the collection chamber 124 of the first phase separator 114A such that the port 172 provides communication between the associated secondary chemical supply line 156 and the first phase separator 114A (see FIG. 2).

A plurality of secondary chemical supply lines 156 may be utilized, for example, in embodiments of the alkaline electrolyzer system that include multiple electrolyzer cells 44 connected in series. In the illustrated embodiment of FIG. 2, which includes a single electrolyzer cell 44, only a single secondary chemical supply line 156 may be needed.

### Filtration

The alkaline electrolyzer system may comprise, for example, a filtration component comprising one or more filtration media. The system is configured to pass the electrolyte solution through the one or more filtration media. The system may be configured, for example, to pass the electrolyte solution through two or more filtration media arranged in series or in parallel.

The filtration component may comprise a dynamic filtration system comprising one or more of: high-capacity filter modules, an automated backwashing system, integrated ultrasonic cleaning transducers, and a real-time monitoring and control system.

For example, the filtration component may comprise a high-efficiency inline dynamic filtration system with self-cleaning capabilities. The filtration component may, for example, employ backwashing or ultrasonic cleaning to periodically clean filters without interrupting operation. Ultrasonic transducers may be integrated into the filter housings associated with one or more filtration media. The ultrasonic transducers may have a tunable frequency (e.g., from about 20 kHz to about 40 kHz) and adjustable power output to optimize cleaning without damaging filter materials. Multifrequency ultrasonic transducers can thus be used to target different sizes and types of contaminants, ensuring comprehensive cleaning without damaging the filtration media.

The filtration component may utilize AI-based algorithms for predictive maintenance, wherein said algorithms are configured to adjust cleaning cycles based on real-time data and historical trends.

Multiple filter cartridges may be arranged in parallel to provide increased system capacity and allow for continuous operation during cleaning cycles. The filtration media may comprise high-capacity, fine-mesh filters, and may be constructed, for example, from stainless steel or advanced polymeric materials.

The filtration component may utilize an adaptive filtration module design. For example, the filtration component may comprise one or more modular filter cartridges that can adapt to varying flow rates and contamination levels, optimizing performance under different operational conditions.

The one or more filtration media may comprise an electrostatic coating that provides particle repulsion. Specialized polymer coatings infused with high dielectric constant antistatic agents or conductive nanoparticles (e.g., TiO₂ or ZnO) may be applied to create a surface that repels charged particles, such as dissolved metal ions (Ni²⁺, Fe^{2+/3+}) and impurities in the KOH electrolyte, that minimizes clogging and extends filter life. Electrostatic spray deposition can be used to uniformly coat the filter elements with the electrostatic coating. This technique ensures a thin, even layer without blocking the porous structure of the filter.

The filtration component may comprise an integrated system that periodically releases passivating agents into the electrolyte to protect the filter materials from corrosion and fouling.

The filtration component may comprise an automatic filter replacement mechanism, such as a robotic mechanism for automatic filter cartridge replacement during operation, which will reduce downtime and reduce or eliminate the need for manual intervention.

### Ion Exchange

The alkaline electrolyzer system may comprise, for example, an ion exchange component comprising at least one ion exchange resin. The system is configured to pass the electrolyte solution through the at least one ion exchange resin.

The ion exchange component may comprise one or more smart resins that are integrated into the electrolyte circuit with real-time monitoring capabilities.

For example, the ion exchange component may comprise one or more multifunctional smart resins that remove cationic (e.g., Ni²⁺) and anionic impurities. The one or more multifunctional smart resins may also act to catalyze side reactions beneficial to the efficiency of the electrolyzer system. For example, the one or more multifunctional smart resins may comprise catalytic nanoparticles (such as Ni-rich or NiO particles) embedded on the resin beads to facilitate reactions like impurity oxidation or electrolyte stabilization.

The ion exchange component may integrate real-time monitoring capabilities. For example, the ion exchange component may comprise one or more resins that change color or conductivity in response to the level of ion saturation within the resin, thereby providing a direct indication of the resin saturation level and the need for regeneration.

The ion exchange component may incorporate one or more micro-sensors within the resin bed to provide precise, localized monitoring of ion concentrations and resin saturation levels, allowing for real-time data collection and process optimization.

The ion exchange component may utilize machine learning algorithms to predict optimal regeneration times based on real-time ion concentration data, electrolyte temperature, flow rate, and/or usage patterns.

The ion exchange component may implement automatic bypass systems to isolate faulty ion-exchange columns or malfunctioning sensors, thereby promoting continuous operation and system reliability.

The ion exchange component may comprise one or more mechanisms for chemical or electrochemical self-regeneration of the resins, allowing the resins to restore ion-exchange and catalytic properties without external intervention. For example, the ion exchange component may comprise a mechanism for introducing a mild acid or reducing agent (e.g., citric acid or a mild organic reductant) to regenerate the resins by desorbing bound ions. The mild acid or reducing agent can be applied by periodically flushing the resin column with a regeneration solution followed by rinsing with KOH to restore the operating environment. As a further example, the ion exchange component may comprise an electrochemical cell within the resin bed. The ion exchange component may be configured to periodically apply a mild electrical current, thereby facilitating the reduction of oxidized catalytic sites or desorption of adsorbed ions. For example, the ion exchange component may be configured to periodically alternate between a low voltage cathodic cycle and a low voltage anodic cycle.

The ion exchange component may utilize an ion exchange resin comprising a polymer matrix resistant to high-pH KOH environments, such as crosslinked polystyrene-divinylbenzene (PS-DVB), thereby promoting long-term structural integrity and consistent performance over time. The PS-DVB matrix may be functionalized with specific groups (e.g., sulfonic acid or amine groups) to enhance ion-exchange properties while withstanding the harsh environment within the electrolyzer system. Inorganic fillers like zirconia or titania nanoparticles may be integrated within the polymer matrix to enhance mechanical strength and chemical resistance, thereby promoting structural integrity over prolonged use within the electrolyzer system.

### Corrosion Inhibitors

The alkaline electrolyzer system may comprise, for example, a corrosion inhibition component configured to introduce at least one corrosion inhibitor into the electrolyte solution.

The corrosion inhibition component may be configured to introduce a blend of two or more corrosion inhibitors. Without being bound to a particular theory, a blend of corrosion inhibitors can be configured to minimize galvanic corrosion wherein a first corrosion inhibitor preferentially adsorbs on the anodic sites of the corroding surface, and a second corrosion inhibitor preferentially adsorbs on the cathodic sites of the corroding surface. For example, the corrosion inhibition component may comprise a blend of a first corrosion inhibitor comprising a transition metal salt (e.g., a copper salt) and a second corrosion inhibitor comprising a nitrogen-containing compound (e.g., an imidazoline-based corrosion inhibitor). As an illustrative example, copper will preferentially adsorb on the cathodic sites while imidazoline-based corrosion inhibitors will preferentially adsorb on the anodic sites.

The corrosion inhibition component may be configured to introduce one or more corrosion inhibitors (e.g., phosphates, silicates) that are encapsulated in microcapsules. The microcapsules may, for example, release the active agent gradually when specific conditions are met (e.g., pH changes or temperature rise), thereby providing controlled and sustained protection. For example, the corrosion inhibition component may comprise sodium silicate in microcapsules that dissolve at a controlled rate, releasing silicate ions to form a protective layer on Ni surfaces. This controlled release prevents rapid depletion and maintains long-term protection without sacrificing the electronic conductivity

The corrosion inhibition component may be configured to introduce one or more multifunctional additives that prevent corrosion and also enhance the electrolyte conductivity or provide other beneficial properties that improve overall performance of the electrolyzer system.

The corrosion inhibition component may utilize one or more smart sensors for real-time monitoring and adjustment of concentration of corrosion inhibitors in the electrolyte. Smart sensors may provide detection of changes in electrolyte composition, and the corrosion inhibition component may be configured to automatically adjust inhibitor levels to maintain optimal protection. For example, the corrosion inhibition component may comprise one or more sensors that monitor Ni²⁺ ion concentration and pH levels in real-time. These sensors can trigger the release of additional inhibitors when corrosion indicators are detected, ensuring optimal inhibitor levels within the electrolyzer system.

The corrosion inhibition component may utilize selective targeting by addition of inhibitors that preferentially target areas with higher corrosion risk, such as junctions between different metals. This can be achieved by the design of inhibitors with specific affinity for particular metal ions, such as phosphonate compounds that specifically target Ni ions. These inhibitors can form a passivating film on Ni surfaces, particularly at junctions where different metals meet, preventing localized corrosion.

The corrosion inhibition component may utilize self-healing formulations that release additional protective agents into the electrolyte to repair and mitigate damage upon detecting corrosion. For example, the corrosion inhibition component may be configured to disperse polymeric microcapsules containing a corrosion inhibitor and a healing agent. When corrosion starts, the capsules rupture, releasing both the inhibitor and a polymer that seals micro-cracks on the Ni surface.

It is desirable to ensure that all inhibitors and/or additives are compatible with existing electrolyzer components, are environmentally benign, and do not negatively affect hydrogen production efficiency or safety (e.g., sodium benzoate).

### Chelating Agents

The alkaline electrolyzer system may comprise, for example, a chelating agent component configured to introduce at least one chelating agent into the electrolyte solution.

Non-limiting examples of suitable chelating agents include nitrilotriacetic acid (NTA), polycarboxylates, and mixtures thereof. These agents are effective in binding and sequestering dissolved Ni²⁺ ions or other metal impurities, preventing their redeposition on electrodes or membranes (i.e., the chelating agents do not degrade or impair membrane functionality).

The chelating agent component may be configured to introduce optimal concentrations of chelating agents to the KOH electrolyte. Optimal concentration of the chelating agent is required to balance between sequestering the metal ions and preventing enhanced dissolution of the metals because the formation of stable metal complexes can prevent redeposition of the metal leading to enhanced dissolution.

The electrolyzer system may be configured to combine chelating agents with corrosion inhibitors, such as phosphonates or silicates, specifically designed for KOH and Ni-containing electrolyzer systems. This combination provides comprehensive protection against both metal dissolution and ion poisoning.

The chelating agent component may incorporate continuous real-time monitoring of metal ion concentrations in the electrolyte. For example, the chelating agent component may utilize advanced analytical techniques, such as inductively coupled plasma mass spectrometry (ICP-MS/OES) or electrochemical sensors, to detect trace metal ions.

The chelating agent component may utilize a feedback loop that automatically adjusts the concentration of chelating agents and inhibitors based on real-time data. This ensures optimal protection while minimizing the use of additives.

The chelating agent component may be configured to implement a maintenance protocol that includes regular inspection and cleaning of the membrane to prevent fouling and maintain efficiency.

The phrases, unless otherwise specified, "consists essentially of' and "consisting essentially of' do not exclude the presence of other steps, elements, or materials, whether or not, specifically mentioned in this specification, so long as such steps, elements, or materials, do not affect the basic and novel characteristics of the present disclosure, additionally, they do not exclude impurities and variances normally associated with the elements and materials used.

Numerical ranges used herein include the numbers recited in the range. For example, the numerical range "from 1 wt % to 10 wt %" includes 1 wt % and 10 wt % within the recited range.

For the sake of brevity, only some ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

All numerical values within the detailed description herein are modified by "about" the indicated value, and take into account experimental error and variations that would be expected by a person having ordinary skill in the art.

All documents described herein are incorporated by reference herein, including any priority documents and or testing procedures to the extent they are not inconsistent with this text. As is apparent from the foregoing general description and the specific embodiments, while forms of the present disclosure have been illustrated and described, various modifications can be made without departing from the spirit and scope of the present disclosure. Accordingly, it is not intended that the present disclosure be limited thereby. Likewise, the term "comprising" is considered synonymous with the term "including" for purposes of United States law. Likewise whenever a composition, an element or a group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

The specific embodiments described herein have been illustrated by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for (perform)ing (a function)..." or "step for (perform)ing (a function)...", it is intended that such elements are to be interpreted under 35 U.S.C. 112(f). However, for any claims containing elements designated in any other manner, it is intended that such elements are not to be interpreted under 35 U.S.C. 112(f).

### Embodiments

Implementation examples are described in the following numbered clauses:
E1. A system for electrolyzing water, the system comprising:
   a first electrode set comprising:
      a first bipolar plate electrically coupled to a first power source, and a first electrode disposed adjacent to the first bipolar plate and in electrical contact with the first bipolar plate;
   a diaphragm, wherein the first electrode is disposed adjacent to a first side of the diaphragm;
   a second electrode set comprising:
      a second bipolar plate and a second electrode, wherein the second electrode is disposed adjacent to a second side of the diaphragm, the second side opposite the first side;
   an electrolyte solution having a pH greater than 7; and
   a filtration component comprising one or more filtration media, wherein the system is configured to pass the electrolyte solution through the one or more filtration media.
E2. The system of embodiment E1 wherein the system is configured to pass the electrolyte solution through one or more filtration media arranged in series.
E3. The system of embodiment E1 wherein the system is configured to pass the electrolyte solution through one or more filtration media arranged in parallel.
E4. The system of embodiment E1 wherein the filtration component comprises a dynamic filtration system comprising one or more of: high-capacity filter modules, an automated backwashing system, integrated ultrasonic cleaning transducers, and a real-time monitoring and control system.
E5. The system of embodiment E1 wherein the filtration component comprises at least one ultrasonic transducer integrated into a filter housing associated with one of said filtration media.
E6. The system of embodiment E5 wherein the ultrasonic transducer is adjustable with respect to both frequency and power output, and wherein the frequency of the ultrasonic transducer is adjustable with a range of from about 20 kHz to about 40 kHz.
E7. The system of embodiment E1 wherein the filtration component utilizes AI-based algorithms for predictive maintenance, wherein said algorithms are configured to adjust cleaning cycles based on real-time data and historical trends.
E8. The system of embodiment E1 wherein at least one of the filtration media comprises an electrostatic coating.
E9. The system of embodiment E8 wherein the electrostatic coating comprises a polymer infused with high dielectric constant antistatic agents or conductive nanoparticles.
E10. The system of embodiment E9 wherein the electrostatic coating comprises a polymer infused with TiO₂ or ZnO nanoparticles.
E11. The system of embodiment E1 wherein the filtration component is configured to periodically release passivating agents into the electrolyte.
E12. The system of embodiment E1 wherein the filtration component comprises a robotic mechanism for automatic filter cartridge replacement.
E13. A system for electrolyzing water, the system comprising:
   a first electrode set comprising:
   a first bipolar plate electrically coupled to a first power source, and a first electrode disposed adjacent to the first bipolar plate and in electrical contact with the first bipolar plate;
   a diaphragm, wherein the first electrode is disposed adjacent to a first side of the diaphragm;
   a second electrode set comprising:
      a second bipolar plate and a second electrode, wherein the second electrode is disposed adjacent to a second side of the diaphragm, the second side opposite the first side;
   an electrolyte solution having a pH greater than 7; and
   an ion exchange component comprising at least one ion exchange resin, wherein the system is configured to pass the electrolyte solution through the at least one ion exchange resin.
E14. The system of embodiment E13 wherein the ion exchange component comprises at least one multifunctional smart resin that removes cationic and anionic impurities.
E15. The system of embodiment E14 wherein the multifunctional smart resin comprises catalytic nanoparticles embedded on resin beads.
E16. The system of embodiment E15 wherein the multifunctional smart resin comprises NiO nanoparticles embedded on resin beads.
E17. The system of embodiment E13 wherein the ion exchange component comprises at least one ion exchange resin that changes color or conductivity in response to the level of ion saturation within the ion exchange resin.
E18. The system of embodiment E13 wherein the ion exchange component comprises one or more micro-sensors within the resin bed, wherein said micro-sensors monitor at least one of (a) ion concentration in the electrolyte solution or (b) the level of ion saturation within the resin.
E19. The system of embodiment E13 wherein the ion exchange component comprises one or more mechanisms for chemical or electrochemical self-regeneration of the ion exchange resin.
E20. The system of embodiment E19 wherein the ion exchange component comprises a mechanism for introducing a mild acid or reducing agent into the electrolyte solution.
E21. The system of embodiment E13 wherein the ion exchange component comprises an electrochemical cell within the resin bed.
E22. The system of embodiment E21 wherein the electrochemical cell is configured to periodically alternate between a low voltage cathodic cycle and a low voltage anodic cycle.
E23. The system of embodiment E13 wherein the ion exchange component comprises at least one ion exchange resin comprising a crosslinked polystyrene-divinylbenzene (PS-DVB) matrix.
E24. The system of embodiment E23 wherein the polystyrene-divinylbenzene (PS-DVB) matrix is functionalized with at least one moiety selected from the group consisting of sulfonic acid groups and amine groups.
E25. The system of embodiment E23 or E24 wherein the ion exchange resin comprises at least one inorganic filler selected from the group consisting of zirconia nanoparticles and titania nanoparticles.
E26. A system for electrolyzing water, the system comprising:
   a first electrode set comprising:
   a first bipolar plate electrically coupled to a first power source, and a first electrode disposed adjacent to the first bipolar plate and in electrical contact with the first bipolar plate;
   a diaphragm, wherein the first electrode is disposed adjacent to a first side of the diaphragm;
   a second electrode set comprising:
      a second bipolar plate and a second electrode, wherein the second electrode is disposed adjacent to a second side of the diaphragm, the second side opposite the first side;
   an electrolyte solution having a pH greater than 7; and
   a corrosion inhibition component configured to introduce least one corrosion inhibitor into the electrolyte solution.
E27. The system of embodiment E26 wherein the corrosion inhibition component is configured to introduce a blend of two or more corrosion inhibitors into the electrolyte solution.
E28. The system of embodiment E27 wherein the blend of two or more corrosion inhibitors comprises a first corrosion inhibitor comprising a transition metal salt.
E29. The system of embodiment E28 wherein the first corrosion inhibitor is a copper salt.
E30. The system of embodiment E28 or E29 wherein the blend of two or more corrosion inhibitors comprises a second corrosion inhibitor comprising a nitrogen-containing compound.
E31. The system of embodiment E30 wherein the second corrosion inhibitor is an imidazoline-based corrosion inhibitor.
E32. The system of embodiment E26 wherein the corrosion inhibition component is configured to introduce one or more corrosion inhibitors encapsulated in microcapsules.
E33. The system of embodiment E32 wherein the one or more corrosion inhibitors are selected from the group consisting of phosphates and silicates.
E34. The system of embodiment E33 wherein the corrosion inhibition component is configured to introduce microencapsulated sodium silicate.
E35. The system of embodiment E26 wherein the corrosion inhibition component is configured to utilize one or more smart sensors for real-time monitoring and adjustment of concentration of corrosion inhibitors in the electrolyte.
E36. The system of embodiment E26 wherein the corrosion inhibition component is configured to disperse polymeric microcapsules containing a corrosion inhibitor and a healing agent.
E37. A system for electrolyzing water, the system comprising:
   a first electrode set comprising:
   a first bipolar plate electrically coupled to a first power source, and a first electrode disposed adjacent to the first bipolar plate and in electrical contact with the first bipolar plate;
   a diaphragm, wherein the first electrode is disposed adjacent to a first side of the diaphragm;
   a second electrode set comprising:
      a second bipolar plate and a second electrode, wherein the second electrode is disposed adjacent to a second side of the diaphragm, the second side opposite the first side;
   an electrolyte solution having a pH greater than 7; and
   a chelating agent component configured to introduce at least one chelating agent into the electrolyte solution.
E38. The system of embodiment E37 wherein at least one chelating agent is selected from the group consisting of nitrilotriacetic acid (NTA), polycarboxylates, and mixtures thereof.
E39. The system of embodiment E37 wherein the chelating agent component conducts continuous real-time monitoring of metal ion concentrations in the electrolyte solution.
E40. The system of embodiment E37 wherein the chelating agent component utilizes inductively coupled plasma mass spectrometry (ICP-MS/OES) or electrochemical sensors to detect trace metal ions present in the electrolyte solution.
E41. The system of embodiment E37 wherein the chelating agent component utilizes a feedback loop that automatically adjusts the concentration of chelating agents in the electrolyte based on real-time data.
While the present disclosure has been described with respect to a number of embodiments and examples, those skilled in the art, having benefit of this disclosure, will appreciate that other embodiments can be devised which do not depart from the scope and spirit of the present disclosure.

## Claims

1. A system (110) for electrolyzing water, the system (110) comprising:
a first electrode set comprising:
a first bipolar plate (84) electrically coupled to a first power source (108), and
a first electrode (90) disposed adjacent to the first bipolar plate (84) and in electrical contact with the first bipolar plate (84);
a diaphragm (92), wherein the first electrode (90) is disposed adjacent to a first side of the diaphragm (92);
a second electrode set comprising:
a second bipolar plate (100) and a second electrode (94), wherein the second electrode (94) is disposed adjacent to a second side of the diaphragm (92), the second side opposite the first side;
an electrolyte solution (104) having a pH greater than 7; and
a filtration component (136) comprising one or more filtration media, wherein the system (110) is configured to pass the electrolyte solution (104) through the one or more filtration media.

2. The system (110) of claim 1, wherein the system (110) is configured to pass the electrolyte solution (104) through one or more filtration media arranged in series.

3. The system (110) of claim 1, wherein the system (110) is configured to pass the electrolyte solution (104) through one or more filtration media arranged in parallel.

4. The system (110) of any of claims 1 to 3, wherein the filtration component (136) comprises a dynamic filtration system comprising one or more of: a high-capacity filter module, an automated backwashing system, an integrated ultrasonic cleaning transducer, and a real-time monitoring and control system.

5. The system (110) of any of claims 1 to 4, wherein the filtration component (136) utilizes AI-based algorithms for predictive maintenance, wherein said algorithms are configured to adjust cleaning cycles based on real-time data and historical trends.

6. The system (110) of any of claims 1 to 5, wherein at least one of the filtration media comprises an electrostatic coating including a polymer infused with high dielectric constant antistatic agents or conductive nanoparticles.

7. The system (110) of any of claims 1 to 6, wherein the filtration component (136) is configured to periodically release passivating agents into the electrolyte solution (104).

8. The system (110) of any of claims 1 to 7, wherein the filtration component (136) comprises a robotic mechanism for automatic filter cartridge replacement.

9. A system (110) for electrolyzing water, the system (110) comprising:
a first electrode set comprising:
a first bipolar plate (84) electrically coupled to a first power source (108), and
a first electrode (90) disposed adjacent to the first bipolar plate (84) and in electrical contact with the first bipolar plate (84);
a diaphragm (92), wherein the first electrode (90) is disposed adjacent to a first side of the diaphragm (92);
a second electrode set comprising:
a second bipolar plate (100) and a second electrode (94), wherein the second electrode (94) is disposed adjacent to a second side of the diaphragm (92), the second side opposite the first side;
an electrolyte solution (104) having a pH greater than 7; and
an ion exchange component (140) comprising at least one ion exchange resin, wherein the system (110) is configured to pass the electrolyte solution (104) through the at least one ion exchange resin.

10. The system (110) of claim 9, wherein the ion exchange component (140) comprises at least one multifunctional smart resin that removes cationic and anionic impurities, the at least one multifunctional smart resin comprising catalytic nanoparticles embedded on resin beads.

11. The system (110) of claim 9 or claim 10, wherein the ion exchange component (140) comprises at least one ion exchange resin that changes color or conductivity in response to a level of ion saturation within the at least one ion exchange resin.

12. The system (110) of any of claims 9 to 11, wherein the ion exchange component (140) comprises one or more micro-sensors embedded within the at least one ion exchange resin,
wherein said micro-sensors monitor at least one of (a) an ion concentration in the electrolyte solution (104) or (b) a level of ion saturation within the at least one ion exchange resin.

13. The system (110) of any of claims 9 to 12, wherein the ion exchange component (140) comprises one or more mechanisms for chemical or electrochemical self-regeneration of the at least one ion exchange resin.

14. The system (110) of any of claims 9 to 13, wherein the ion exchange component (140) comprises an electrochemical cell embedded within the at least one ion exchange resin, the electrochemical cell configured to periodically alternate between a low voltage cathodic cycle and a low voltage anodic cycle.

15. The system (110) of any of claims 9 to 14, wherein the ion exchange component (140) comprises at least one ion exchange resin comprising a crosslinked polystyrene-divinylbenzene (PS-DVB) matrix.
